# EUROPÄISCHE PATENTANMELDUNG

(11) **EP 3 896 590 A1**
(43) Veröffentlichungstag der Anmeldung: **20.10.2021**
(21) Anmeldenummer: 20170134.9
(22) Anmeldetag: 17.04.2020
(51) Int. Cl.: G06F 21/57, G06F 8/60, G06F 8/65, H04L 29/08

(54) **VERFAHREN UND SYSTEME ZUM ÜBERTRAGEN VON SOFTWARE-ARTEFAKTEN AUS EINEM QUELLNETZWERK ZU EINEM ZIELNETZWERK**

(71) Anmelder: Siemens Aktiengesellschaft, 80333 München (DE)
(72) Erfinder: Fischer, Jan-Gregor, 85604 Zorneding (DE)

(57) **Zusammenfassung**

Die Erfindung betrifft ein Verfahren zum Übertragen von Software-Artefakten aus einem Quellnetzwerk (QN) in ein Zielnetzwerk (ZN), wobei zwischen dem Ziel- und dem Quellnetzwerk ein Proxy-System (PS) angeordnet ist, wobei das Proxy-System (PL) ein Plugin (PL) umfasst, wobei das Übertragen zielnetzwerkseitig kontrolliert wird, wobei
- eine zielnetzwerkinterne Informationsstruktur (WL) bereitgestellt wird, wobei die Informationsstruktur Einträge enthält, wobei jeder Eintrag jeweils ein Software-Artefakt kennzeichnet, dessen Herunterladen von einem Betreiber des Zielnetzwerks (ZN) genehmigt ist,
mittels des Plugins (PL):
- die Einträge aus der zielnetzwerkinternen Informationsstruktur (WL) ausgelesen werden,
- Anfragen aus dem Zielnetzwerk (WL) bezüglich Verfügbarkeit neuer Software-Artefakte stellvertretend für das Quellnetzwerk (QN) empfangen werden,
- für jede Anfrage nach wenigstens einem zu der Anfrage passenden Eintrag in der zielnetzwerkinternen Informationsstruktur (WL) zu suchen, und
- abhängig davon, ob der wenigstens eine passende Eintrag in der zielnetzwerkinternen Informationsstruktur (WL) vorhanden ist, entweder das in dem wenigstens einen, zu der Anfrage passenden Eintrag gekennzeichnete Software-Artefakt abgerufen wird oder die Anfrage blockiert wird.

## Beschreibung

Die Erfindung betrifft ein vorzugsweise computerimplementiertes Verfahren zum Übertragen von Software-Artefakten aus einem Quellnetzwerk in ein Zielnetzwerk, wobei zwischen dem Ziel- und dem Quellnetzwerk ein Proxy-System mit einem Plugin angeordnet ist, wobei das Übertragen zielnetzwerkseitig kontrolliert wird.

Außerdem betrifft die Erfindung das vorgenannte Plugin.

Darüber hinaus betrifft die Erfindung ein System, insbesondere ein IT-System, in dem das vorgenannte Plugin zum Durchführen des vorgenannten Verfahrens einsetzbar ist.

Um Vorteile im Bereich der Digitalisierung zugänglich zu machen baut Cloud und insbesondere Edge Computing eine Brücke zwischen der Welt der klassischen Automatisierung und der Welt der informationstechnischen Datenverarbeitung durch die Neuerungen der Digitalisierung.

Damit einhergehend halten schnellere Firmware und Software-Updatezyklen auf der Edge Einzug, und rücken die Automatisierung von Industrie- und Produktionsanlagen näher an externe Netzwerke, z.B. das Internet und insbesondere an im Internet befindliche Cloud Plattformen, die alles Notwendige für die Digitalisierung von Industrie- und Produktionsanlagen zur Verfügung stellen können.

Die etablierten, klassischen Sicherheitskonzepte haben mit diesem "offenen" Szenario stark zu kämpfen. Besonders im Bereich Edge Computing gibt es ein bekanntes Dilemma: entweder Abschottung von der cloud-integrierten Digitalisierung oder Öffnung der internen Unternehmensnetzwerke, so dass der Angriffsvektor auf ihre Automatisierung zunimmt.

Konkret besteht ein großer Bedarf nach Lösung folgenden Dilemmas :
Einerseits soll Schutz des internen Unternehmensnetzwerkes und der Automatisierung vor Schadsoftware und anderen Angriffen von Extern gewährleistbar sein und gleichzeitig sollen die internen Unternehmensnetzwerke für die Digitalisierung geöffnet werden, um insbesondere an den Vorteilen von schnellen Updatezyklen bei Edge Plattform Firmware, Edge Applikationen, jeglichen Arten von Konfigurationen sowie bei analytischen Modellen teilzuhaben.

Der Erfindung liegt also die Aufgabe zugrunde, Sicherheit eines internen Netzwerkes einer Industrie- oder einer Produktionsanlage zu erhöhen, welche Ressourcen einer Cloud-Plattform nutzt.

Diese Aufgabe wird mit einem eingangs genannten Verfahren erfindungsgemäß dadurch gelöst, dass
- eine zielnetzwerkinterne Informationsstruktur bereitgestellt wird, wobei die Informationsstruktur Einträge, beispielsweise eine Vielzahl von Einträgen enthält, wobei jeder Eintrag jeweils ein Software-Artefakt kennzeichnet, dessen Herunterladen von einem Betreiber des Zielnetzwerks genehmigt ist, wobei das Übertragen von Software-Artefakten zielnetzwerkseitig mittels des Plugins kontrolliert wird, wobei:
- die Einträge aus der zielnetzwerkinternen Informationsstruktur ausgelesen werden,
- Anfragen aus dem Zielnetzwerk bezüglich Verfügbarkeit neuer Software-Artefakte stellvertretend für das Quellnetzwerk empfangen werden,
- für jede Anfrage nach wenigstens einem zu der Anfrage passenden Eintrag in der zielnetzwerkinternen Informationsstruktur zu suchen, und
- abhängig davon, ob der wenigstens eine passende Eintrag in der zielnetzwerkinternen Informationsstruktur vorhanden ist, entweder das in dem wenigstens einen, zu der Anfrage passenden Eintrag gekennzeichnete Software-Artefakt abgerufen wird oder die Anfrage blockiert wird.

In einer Ausführungsform kann die zielnetzwerkinterne Informationsstruktur in Form einer Datei ausgeführt sein.

Die vorgenannten Einträge können in einer Datei oder in einer anderen Struktur (Informationsstruktur) enthalten sein. Sie können bspw. als Einträge in einem Datenbanksystem, welches die Informationen intern auf eine Vielzahl von Dateien aufteilt (verteiltes Datensystem), oder ausschließlich im Hauptspeicher vorliegen.

Es kann vorgesehen sein, dass das Bereitstellen der zielnetzwerkinternen Informationsstruktur vollständig durch ein Computerprogramm durchgeführt wird, das entsprechende Befehle abarbeitet. Somit kann das Verfahren ein computerimplementiertes Verfahren sein.

Bei einer Ausführungsform kann es mit Vorteil vorgesehen sein, dass eine Anfrage Bezeichnung eines Endgeräts (Typ, Modell, etc.) enthalten.

Bei einer Ausführungsform kann hinsichtlich der Netzressourcen und des Zeitaufwandes zweckdienlich sein, wenn das Plugin die gleichen Anfragen poolt, wenn sie beispielsweise von gleichen Geräten stammen, und beim Suchen lediglich eine Anfrage verwendet und nur ein Mal herunterlädt.

Bei einer Ausführungsform kann mit Vorteil vorgesehen sein, dass das Bereitstellen der zielnetzwerkinternen Informationsstruktur Teilschritte umfasst, in welchen
- in dem Quellnetzwerk Nachrichten über verfügbare Software-Artefakte generiert und an einen Betreiber des Zielnetzwerks übermittelt werden, wobei jede Nachricht Daten enthält, die wenigstens ein verfügbares Software-Artefakt kennzeichnen,
- jede Nachricht durch den Betreiber überprüft wird, um zu bestimmen, ob das Herunterladen des wenigstens einen verfügbaren Software-Artefakts aus dem Quellnetzwerk erwünscht ist,
- wenn das Herunterladen des wenigstens einen verfügbaren Software-Artefakts erwünscht ist, die das wenigstens eine verfügbare Software-Artefakt kennzeichnenden Daten in die zielnetzwerkinterne Informationsstruktur gespeichert werden, sodass jeder Eintrag jeweils ein Software-Artefakt kennzeichnet, wobei die zielnetzwerkinterne Informationsstruktur vorzugsweise nur von dem Betreiber des Zielnetzwerks geändert werden kann.

Bei einer Ausführungsform kann vorgesehen sein, dass Unterschiedliche Nachrichten über unterschiedliche Software-Artefakte informieren.

Darüber hinaus kann es zweckmäßig sein, wenn die Anfragen in dem Zielnetzwerk in vorgebbaren Zeitabständen generiert werden und vorzugsweise an das Quellnetzwerk oder an das Proxy-System adressiert werden.

Die Sicherheit des Zielnetzwerk kann weiter erhöht werden, wenn zum Abrufen des Software-Artefakts eine Verbindung in nur einer Richtung und zwar aus dem Zielnetzwerk in das Quellnetzwerk aufgebaut und nach dem Abrufen wieder getrennt wird.

Es kann dabei mit Vorteil vorgesehen sein, dass das Plugin das Software-Artefakt stellvertretend für das Zielnetzwerk herunterlädt. Somit sieht z.B. ein Cloud-Server in der Cloud das Plugin, das stellvertretend für die Edge-Geräte in dem Zielnetzwerk agiert.

Darüber hinaus kann es vorteilhaft sein, wenn das Plugin eine Verbindung zwischen dem Zielnetzwerk, z.B. einem Client (Edge-Gerät) im Zielnetzwerk, und einem Server (z.B. einem Backend) im Quellnetzwerk aufbaut, so dass das Software-Artefakt direkt auf den Client heruntergeladen wird.

Darüber hinaus kann es vorgesehen sein, dass das Plugin das heruntergeladene Software-Artefakt an mindestens ein in dem Zielnetzwerk registriertes Gerät, z.B. auf ein Edge-Gerät, weiterleitet, wobei vorzugsweise das Software-Artefakt anschließend auf dem mindestens einen Gerät installiert wird.

Eine weitere Sicherheitsmaßnahme kann getroffen werden, wenn das Software-Artefakt hinsichtlich seiner Integrität mittels des Plugins geprüft wird.

Es kann dabei zweckmäßig sein, wenn die Integritätsprüfung eine Signaturvalidierung des Software-Artefakts umfasst.

Dabei kann die Signatur der heruntergeladenen Software-Artefakt-Dateien oder -Files geprüft werden. Ist diese optionale Prüfung nicht erfolgreich, so kann das heruntergeladene Artefakt gelöscht und optional ein Alert auf Kundenseite generiert werden.

Es kann zweckdienlich sein, wenn jeder Eintrag eine Identifikation des Software-Artefakts und/oder kryptographische Signatur des Software-Artefakts, beispielsweise ein signierter Hash des Dateiinhalts des Software-Artefakts, und/oder eine Angabe eines Zeitpunkts, zu welchem das Software-Artefakt herunterladbar ist, und/oder eine textuelle Beschreibung, beispielsweise ein Change-Log umfasst.

Bei einer Ausführungsform kann mit Vorteil vorgesehen sein, dass Schlüsselpaare aus privaten und öffentlichen Schlüsseln generiert werden, wobei die privaten Schlüssel dem Quellnetzwerk bereitgestellt werden und die öffentlichen Schlüsseln dem Zielnetzwerk bereitgestellt werden, wobei die Software-Artefakte mit mittels der privaten Schlüssel generierten Signaturen in dem Quellnetzwerk (vor dem Herunterladen) signiert werden und die Signaturen der signierten Software-Artefakte mittels der entsprechenden öffentlichen Schlüssel auf jenem Gerät in dem Zielnetzwerk validiert werden, für das das Software-Artefakt bestimmt ist.

Dabei kann beispielsweise für das Signieren eines jedes Software-Artefakts jeweils ein privater Schlüssel verwendet werden.

Dies kann beispielsweise eine Ende-zu-Ende Signierung des Artefakts durch den Plattform-Provider mit Generierung einer Artefakt-Signatur mittels eines privaten Schlüssels des Plattform-Providers vor Artefakt-Download auf der Cloud (in dem Quellnetzwerk) und Validierung des Artefakts mittels eines zugehörigen öffentlichen Schlüssels in dem Zielnetzwerk vor Installation auf der Edge ermöglichen.

Weiterhin kann es zweckmäßig sein, wenn das Software-Artefakt vor dem Herunterladen verschlüsselt und nach dem Herunterladen entschlüsselt wird.

Hierdurch kann beispielsweise eine Ende-zu-Ende Verschlüsselung des Software-Artefakts durch den Plattform-Provider anhand eines öffentlichen Schlüssels des Plattform-Providers vor Artefakt-Download auf der Cloud (in dem Quellnetzwerk) und Entschlüsselung des Software-Artefakts mittels eines zugehörigen privaten Schlüssels in dem Zielnetzwerk, z.B. auf einem Edge-Gerät vor Installation auf der Edge ermöglicht werden.

Hinsichtlich des Auditings kann es zweckdienlich sein, wenn alle Schritte des Verfahrens protokolliert werden, wobei jeder Schritt vorzugsweise mit einem Zeitstempel versehen wird, wobei ein dadurch erstelltes Protokoll vorzugsweise in einer Datenbank abgelegt wird, wobei die Datenbank in dem Zielnetzwerk enthalten ist.

Außerdem kann es mit Vorteil vorgesehen sein, dass das Plugin zumindest teilweise die Anfragen und das Herunterladen betreffende Details in einer Log-Datenstruktur aufzeichnet.

Die Log-Datenstruktur kann beispielsweise in Form einer Log-Datei definiert sein und vorzugsweise in einer persistenten oder flüchtigen Datenbank oder in einem Archivsystem aufgezeichnet sein.

Ferner wird die Aufgabe mit einem Plugin der oben genannten Art erfindungsgemäß dadurch gelöst, dass das Plugin dazu konfiguriert ist,
- Einträge aus einer zielnetzwerkinternen Informationsstruktur auszulesen, wobei jeder Eintrag jeweils ein Software-Artefakt kennzeichnet, dessen Herunterladen von einem Betreiber des Zielnetzwerks genehmigt ist,
- Anfragen aus dem Zielnetzwerk an das Quellnetzwerk bezüglich Verfügbarkeit neuer Software-Artefakte stellvertretend für das Quellnetzwerk zu empfangen,
- für jede Anfrage nach wenigstens einem zu der Anfrage passenden Eintrag in der zielnetzwerkinternen Informationsstruktur zu suchen, und
- abhängig davon, ob der wenigstens eine passende Eintrag in der zielnetzwerkinternen Informationsstruktur vorhanden ist, entweder das in dem wenigstens einen, zu der Anfrage passenden Eintrag gekennzeichnete Software-Artefakt abzurufen oder die Anfrage zu blockieren.

Dabei können das Plugin einen entsprechenden Code und die zielnetzwerkinterne Informationsstruktur eine dem Code des Plugins passende Struktur aufweisen, sodass das Plugin und die zielnetzwerkinterne Informationsstruktur zueinander passen und das Auslesen der Einträge aus der zielnetzwerkinternen Informationsstruktur erleichtert ist.

Bei einer Ausführungsform kann es vorgesehen sein, dass das Plugin als eine Firewall, z.B. eine Proxy-Firewall ausgebildet sein - also alle Funktionalitäten einer Firewall aufweisen - oder wenigstens einen Teil eines Firewall-Regelwerks umfassen.

Die Aufgabe der Erfindung wird außerdem mit einem System der oben genannten Art erfindungsgemäß dadurch gelöst, dass das System ein Quellnetzwerk, ein Zielnetzwerk, ein zwischen dem Ziel- und dem Quellnetzwerk zwischengeschaltetes Proxy-System und eine zielnetzwerkinterne Informationsstruktur umfasst, wobei das Proxy-System das vorgenannte Plugin umfasst, die Informationsstruktur Einträge enthält, wobei jeder Eintrag jeweils ein Software-Artefakt kennzeichnet, dessen Herunterladen von einem Betreiber des Zielnetzwerks genehmigt ist, und das System vorzugsweise zusätzliche Mittel, z.B. Soft-und Hardware-Komponenten zur Ausführung der Schritte des vorgenannten Verfahrens umfasst.

Im Folgenden wird die Erfindung anhand der in den Figuren dargestellten Ausführungsbeispiele näher beschrieben und erläutert. Es zeigen:
- FIG 1: eine erste IT-Umgebung, und
- FIG 2: eine zweite IT-Umgebung.

In den Ausführungsbeispielen und Figuren können gleiche oder gleich wirkende Elemente jeweils mit den gleichen Bezugszeichen versehen sein.

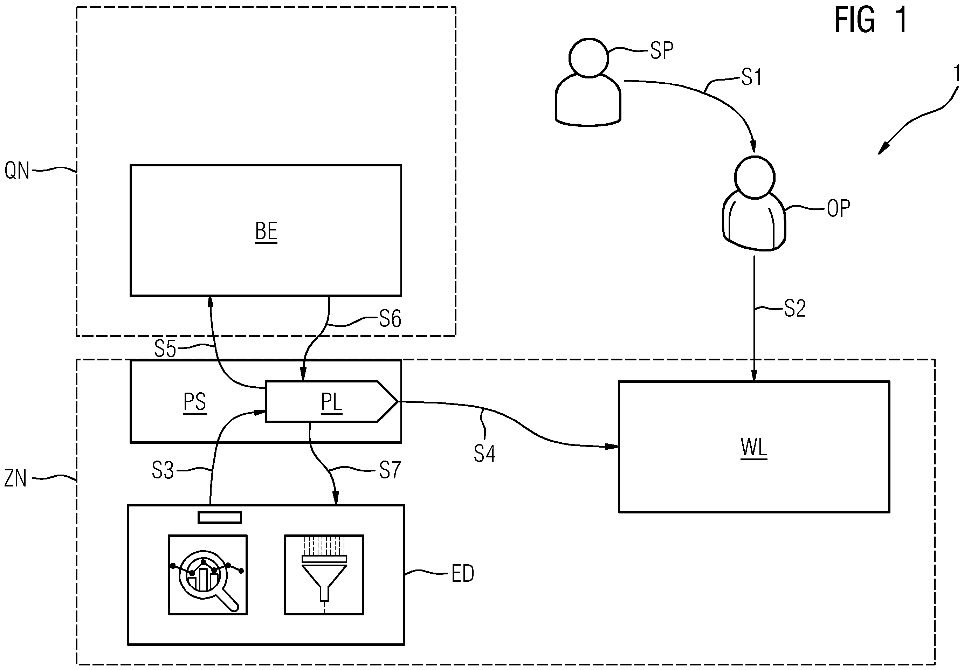

FIG 1 zeigt eine stark vereinfachte Informationstechnologie-Umgebung (IT-Umgebung bzw. ein IT-Ökosystem), in der ein Beispiel des erfindungsgemäßen Verfahrens realisiert werden kann.

Das gezeigte IT-System 1 kann ein Quellnetzwerk QN, ein Zielnetzwerk ZN und ein zwischen dem Ziel- und dem Quellnetzwerk zwischengeschaltetes Proxy-System PS umfassen. Beispielsweise kann es vorgesehen sein, dass die im Zielnetzwerk ZN registrierten Geräte aus dem Quellnetzwerk QN ausschließlich durch das Proxy-System PS erreichbar sind.

Das Quellnetzwerk QN kann eine Cloud-Computing- oder eine Edge-Management-Plattform umfassen, die dem Zielnetzwerk ZN zugeordnet ist und bspw. eine Menge von Edge-Geräten verwaltet

Das Zielnetzwerk ZN kann beispielsweise als ein lokales Netzwerk einer beispielsweise automatisierten Industrieanlage, insbesondere einer Produktionsanlage ausgebildet sein und eine oder mehrere Recheneinheiten, z.B. IoT-Geräte, insbesondere Edge-Geräte ED umfassen, die im Zielnetzwerk registriert sind. Die Recheneinheiten können beispielsweise dazu konfiguriert sein, Daten rund um den Betrieb, z.B. die Produktion der Anlage zu verarbeiten, zu sammeln, zu speichern, an das Quellnetzwerk QN zu senden usw. Dies können beispielsweise Prozessdaten sein. Die Liste der Aufgaben, die durch die Recheneinheiten ausführbar sind, ist nicht abschließend.

Darüber hinaus kann das Zielnetzwerk ein oder mehrere Sub-Netze umfassen (hier nicht gezeigt). Ein Beispiel eines solchen Sub-Netzes kann ein Maschinennetz einer Maschine, z.B. einer Werkzeugmaschine oder eines Roboters, sein. Die Maschine kann mit einer intelligenten Kamera ausgestattet sein, wobei auf der Kamera eine Software zur Bildbearbeitung installiert sein kann.

Einer oder mehreren solcher Maschinen kann jeweils eine der vorgenannten Recheneinheiten, z.B. ein Edge-Gerät zugeordnet sein, um Daten von der einen oder mehreren Maschinen zu erhalten.

Jede Recheneinheit ED kann mit dem Proxy-System PS mittels eines oder mehrere Datenübertragungskanäle verbunden sein. Beispielsweise kann das Zielnetzwerk derart ausgebildet sein, dass die Recheneinheiten ED nicht miteinander, sondern ausschließlich mit der(n) zugeordneten Maschine(n) und dem Proxy-System PS kommunizieren.

Das Proxy-System PS kann eine oder mehrere Proxy-Komponenten umfassen, wobei jede Proxy-Komponente als Soft- und/oder Hardware-Komponente ausgebildet sein kann. Eine Proxy-Komponente kann z.B. als Proxy-Server (Dedicated Proxy) oder als generischer Proxy ausgebildet sein. Ferner kann eine Proxy-Komponente als eine Proxy-Firewall ausgebildet sein.

Die Hardware-Komponenten können baulich getrennt ausgebildet sein.

Beispielsweise kann das Proxy-System PS eine einzige Proxy-Komponente umfassen, der alle vorgenannten Recheneinheiten ED zugeordnet sind. Dabei kann diese Proxy-Komponente von dem Hersteller der Recheneinheiten ED bereitgestellt werden. In einer Ausführungsform kann der Hersteller der Recheneinheiten ED auch als Service/Plattform Provider SP fungieren, der seine Services/Plattform über das Quellnetzwerk QN anbietet.

Beispielsweise kann eine solche Proxy-Komponente in einem einfachsten Fall für die Kommunikation zwischen den Recheneinheiten und dem Quellnetzwerk QN zuständig sein, d.h. Daten (ohne diese zu filtern) von Recheneinheiten an das Quellnetzwerk QN und von dem Quellnetzwerk QN an die entsprechende Recheneinheiten weiterleiten.

Um allgemeinen Traffic zu filtern und zu kontrollieren kann das Proxy-System PS außerdem z.B. eine Proxy-Firewall umfassen.

Das Quellnetzwerk kann z.B. als Internet oder als eine Cloud ausgebildet sein. Beispielsweise kann sich in der Cloud eine Backend-Recheneinheit BE befinden, die - kommunikationstechnisch gesehen - nahe am Zielnetzwerk ZN angeordnet ist. Die Backend-Recheneinheit BE kann beispielsweise als ein Backend-Server ausgebildet sein, der dem Zielnetzwerk zugeordnet ist und beispielsweise stellvertretend für das Quellnetzwerk Anfragen aus dem Zielnetzwerk empfängt, bearbeitet, verwaltet. Der Backend-Server kann auch als Cloud-seitige Rechenressource dem Zielnetzwerk ZN zur Verfügung stehen. Es ist durchaus denkbar, dass die gesamte Kommunikation zwischen dem Quellnetzwerk QN und dem Zielnetzwerk ZN quellnetzwerkseitig über einen solchen Backend-Server BE läuft. Ferner kann die Backend-Recheneinheit BE die notwendigen Software-Artefakte für die Recheneinheiten im Zielnetzwerk ZN zur Verfügung stellen.

Die Backend-Recheneinheit BE kann beispielsweise ein Teil der vorgenannten Edge-Computing-Plattform sein, die vom Quellnetzwerk verwaltet wird.

Das Zielnetzwerk ZN umfasst eine zielnetzwerkinterne Informationsstruktur WL, die Einträge, beispielsweise eine Vielzahl von Einträgen enthält, wobei jeder Eintrag jeweils ein Software-Artefakt kennzeichnet, dessen Herunterladen von einem Betreiber OP des Zielnetzwerks ZN genehmigt ist. Eine solche Informationsstruktur kann "Download-Whitelist" oder einfach "Whitelist" genannt werden.

Vorzugsweise kennzeichnen unterschiedliche Einträge unterschiedliche Software-Artefakte.

Jeder Eintrag kann eine Identifikation des Software-Artefakts und/oder kryptographische Signatur des Software-Artefakts, beispielsweise ein signierter Hash des Dateiinhalts des Software-Artefakts, und/oder eine Angabe eines Zeitpunkts, zu welchem das Software-Artefakt herunterladbar ist, und/oder eine textuelle Beschreibung, beispielsweise ein Change-Log umfassen.

Software-Artefakte können beispielsweise als Softwarepakete ausgebildet sein.

Jedes Softwarepaket kann unterschiedlich ausgeprägt sein, z.B. als eine Firmware-Installationsdatei (Binärdatei), eine Edge App Installationsdatei (Binärdatei), eine Konfigurationsdatei (JSON Textdatei), ein analytisches Modell (PMML / Plain-XML / JSON Datei / ein Dateiarchiv das ein sog. SavedModel von TensorFlow beinhaltet / eine serialisierte Regelbasis / eine beschreibungslogische Definition für logikbasierte Modelle, etc.), eine sog. Onboarding Datei, die Informationen beinhaltet um ein Edge-Device ED zur Kommunikation mit der Cloud bzw. mit einer konkreten Cloud-Plattform zu ertüchtigen, usw.

Außerdem kann jedes Softwarepaket als reiner Content ohne die Hülle einer Datei ausgebildet sein. Der Content kann in verschiedenartigen Formaten (z.B. XML, JSON, Plain Text, Binary Encoding) vorliegen und übertragen werden. Ein solcher Content kann beispielsweise sein: ein Teil einer Konfiguration für eine Edge-Gerät ED Firmware oder für eine Edge-App, z.B. ein sog. JSON Snippet, das Änderungen am Edge-lokalen Benutzer- und Rollenmanagement beinhalten, oder definieren kann, wie viel Arbeitsspeicher eine Edge-App maximal benutzen darf; eine Liste von Arbeitsanweisungen (sog. Jobinformationen), die das entsprechende Edge-Device ED abarbeiten soll, z.B. Anweisungen zum Download weiterer Informationen aus der Cloud, Anweisungen zum Neustart des Edge-Devices ED oder einer Applikation, zum Ausführen einer Aktion auf einem angeschlossenen Gerät (Stopp einer Maschine / Konfiguration einer intelligenten Sensorik / Ansteuerung einer Aktorikkomponente); Anweisungen zum Ausführen von Datenverarbeitungsoperationen und/oder zur Datenanfrage auf/von einem Datenstrom auf dem Edge-Gerät ED und/oder auf/von Daten, die bereits auf dem Edge-Gerät gespeichert sind, usw.

Darüber hinaus kann in jedem Eintrag der Zeitpunkt angegeben werden, zu dem das entsprechende Software-Artefakt verfügbar ist.

Um Herunterladen von den Software-Artefakten aus dem Quellnetzwerk QN in das Zielnetzwerk ZN zu kontrollieren, umfasst das Proxy-System PS, z.B. die den Recheneinheiten ED zugeordnete Proxy-Komponente, ein Plugin PL bzw. eine Software-Erweiterung oder ein (Software-)Zusatzmodul.

Das Plugin ist dazu konfiguriert, die Einträge aus der Whitelist WL auszulesen; Anfragen aus dem Zielnetzwerk ZN an das Quellnetzwerk QN bezüglich Verfügbarkeit neuer Software-Artefakte stellvertretend für das Quellnetzwerk QN zu empfangen; für jede Anfrage nach wenigstens einem zu der Anfrage passenden Eintrag in der Whitelist zu suchen, und, abhängig davon, ob der wenigstens eine passende Eintrag in der Whitelist vorhanden ist, entweder das in dem wenigstens einen, zu der Anfrage passenden Eintrag gekennzeichnete Software-Artefakt abzurufen oder die Anfrage zu blockieren.

In einer Ausführungsform können die Assets bzw. die Edge-Geräte ED in dem Zielnetzwerk anstelle des Servers in dem Quellnetzwerk QN das Proxy-System PS inkl. des Plugins PL zum Abruf des Software-Artefakts anfragen. Dabei kann vorgesehen sein, dass jedes Asset z.B. Edge-Gerät die Anfragen entweder an das Proxy-System PS, das diese an das Plugin PL weitergibt, oder direkt an das Plugin PL schickt. Bei der Kommunikation zwischen dem Proxy-System PS (inkl. Plugin PL) mit dem Quellnetzwerk QN (der Cloud) gibt es immer nur eine Möglichkeit: das Plugin PL (und nicht das Proxy-System PS) muss zwingend die Verbindung zum Quellnetzwerk QN bzw. zu der Cloud kontrollieren.

Das Proxy-System PS kann dabei für die Recheneinheiten ED transparent oder nicht transparent sein.

Bei einer Ausführungsform kann das Proxy-System PS eine Schnittstelle des Plugins PL verwenden, um dieses in seinem Lebenszyklus zu verwalten, bspw. zu starten und zu stoppen vorzugsweise dann, wenn das Proxy-System PS (oder die Proxy-Komponente PK) selbst gestartet und gestoppt wird.

In einer Ausführungsform kann das Proxy-System PS derart konfiguriert sein, dass es gar nicht an der eigentlichen Kommunikation zwischen dem Zielnetzwerk ZN (Assets oder Edge-Geräten ED) und dem Quellnetzwerk QN (Cloud) beteiligt sein muss, sondern nur das Plugin PL verwalten kann.

In einer Ausführungsform kann das Proxy-System PS derart konfiguriert sein, dass es die Anfragen aus dem Zielnetzwerk ZN (z.B. von den Assets oder Edge-Geräten ED) entgegennehmen und an das Plugin PL weiterleiten kann, wobei das Plugin PL dann erst direkt für die Kommunikation mit dem Quellnetzwerk QN (der Cloud) verantwortlich wird und die heruntergeladenen Artefakte zuerst an das Proxy-System PS zurückgibt, welches diese an die aufrufenden Assets oder Edge-Geräte ED übermittelt. Dafür kann es zweckdienlich sein, wenn bei dem Plugin PL eine zusätzliche Schnittstelle implementiert ist, über welche das Proxy-System PS dem Plugin PL alle relevanten Informationen zu Kommunikation mit dem Quellnetzwerk QN mitteilen kann, wie z.B. Adresse in dem Quellnetzwerk QN, von wo das Artefakt bezogen werden kann (z.B. IP und Port), Syntax und Semantik des Aufrufs in dem Quellnetzwerk QN (z.B. ein HTTPS Request mit Information zur Artefakt-Identifikation), Sicherheitsmerkmale (z.B. ein sog. Sicherheits-Token zur Authentifizierung und Autorisierung in dem Quellnetzwerk QN).

Die Anfragen bezüglich Verfügbarkeit neuer Software-Artefakte können beispielsweise mittels der Recheneinheiten ED generiert werden. Diese Anfragen können beispielsweise direkt an das Proxy-System PS, insbesondere an die jene Proxy-Komponente adressiert werden, die der entsprechenden Recheneinheit ED zugeordnet ist.

Die Anfragen können in vorgebbaren, vorzugsweise regelmäßigen Zeitabständen generiert werden. Beispielsweise kann jedes Edge-Gerät ED jede Stunde oder jeden Tag eine Anfrage nach neuen Software-Artefakten an das Proxy-System PS adressieren. Zum Abrufen des Software-Artefakts oder der Software-Artefakte kann eine Verbindung aus dem Zielnetzwerk ZN in das Quellnetzwerk QN aufgebaut und nach dem Abrufen wieder getrennt werden. Das Aufbauen und/oder Trennen der Verbindung kann eben durch das Plugin PL erfolgen, das einen entsprechenden Request als Anfrage zum Download eines Software-Artefakts / mehrerer Software-Artefakte an einen Server in QN starten kann, wobei das / die angefragten Software-Artefakt(e) in Form eines Responses als Antwort auf die Anfrage zurückgegeben werden kann / können, sofern das / die angefragte(n) Software-Artefakt(e) im Quellnetzwerk QN vorhanden ist / sind und das Plugin PL und / oder das / die anfragende(n) Edge Gerät(e) korrekt durch den angefragten Server in QN authentifiziert und zum Abruf Software-Artefakt(e) in QN berechtigt ist / sind.

In einer Ausführungsform kann der Request als eine Anfrage des Plugins PL an einen Server in dem Quellnetzwerk QN ausgestaltet sein und bspw. einem sog. "Request-Response" Muster folgen.

Dabei kann das Plugin PL zunächst eine Request-Struktur (z.B. einen HTTPS Request) aufbauen, in dem alle Informationen stehen, mit deren Hilfe ein Server in dem Quellnetzwerk QN entscheiden kann, welches Software-Artefakt angefragt wurde - im Wesentlichen kann hierfür die ArtifactID oder eine hinreichend genaue Beschreibung des Artefakts ausreichen. Zusätzlich können dem Request Sicherheitsmerkmale (z.B. ein JSON Web Token) zugeordnet werden. Mithilfe der Sicherheitsmerkmale kann der Server in dem Quellnetzwerk QN, an den die Anfrage gestellt wird, das Plugin PL und vorzugsweise auch das/die ursprünglich aufrufenden Assets bzw. Edge-Geräte ED authentifizieren und/oder autorisieren. Der Server im Quellnetzwerk QN kann bspw. dadurch sicherstellen, dass die vom Plugin PL (und optional die von den ein oder mehreren Edge-Geräten ED) vorgegebene Identität korrekt ist, und dass das Plugin PL (und optional das eine oder die mehreren Edge Geräte) berechtigt sind, das Software-Artefakt zu beziehen.

Der Request kann schließlich an den Server in den Quellnetzwerk QN geschickt werden. Dieser kann den Request, z.B. nach erfolgreicher Prüfung der Sicherheitsmerkmale (z.B. Aufsuchen oder Generieren des angefragten Software-Artefakts in QN) verarbeiten und den Request mittels eines Response (z.B. HTTPS Response) beantworten.

Der Response von dem Server in Quellnetzwerk QN kann sodann zum Plugin PL übertragen und von dort auf das eine oder die mehreren Assets bzw. Edge-Geräte gemäß ihrer ursprünglichen Anfrage verteilt werden, womit das vorgenannte Request/ Response-Protokoll abgeschlossen werden kann. Eine Verteilung auf mehreren Assets z.B. Edge-Geräte ist bspw. im Rahmen eines Artefakt-Cachings möglich.

Das Plugin PL verfügt also neben der(den) Identifikationsinformation(en) (z.B. ID/IDs oder URL/URLs) der durch das (die) Edge-Gerät(e) ED angefragte(n) Software-Artefakt(e) auch über alle Informationen zur Durchführung des eigentlichen Abrufs des(der) Software-Artefakts(Artefakte) zum Download aus der Cloud. Diese Informationen kann das Plugin beispielsweise mittels eines aus dem Stand der Technik bekannten "Command" Design Patterns, siehe z.B. Teil der sogenannten "Gang-of-Four" Softwarearchitekturpatterns erhalten.

Das Plugin PL kann die Software-Artefakte z.B. auf das Plugin oder das Proxy-System PS oder direkt auf die entsprechende(n) Recheneinheit(en) herunterladen.

Beim Herunterladen auf das Plugin oder auf das Proxy-System PS lädt das Plugin PL stellvertretend für die entsprechende(n) Recheneinheit(en) die Software-Artefakte zunächst zum Plugin oder dem Proxy herunter und verteilt von dort unabhängig von einer Verbindung zu QN die heruntergeladenen Software-Artefakte weiter an die entsprechende(n) Recheneinheit (en).

Zum direkten Herunterladen der Software-Artefakte auf die Edge-Geräte ED kann das Plugin eine Verbindung zwischen dem Client (Edge-Gerät ED) im Zielnetzwerk ZN, und dem Server (z.B. dem Backend BE) im Quellnetzwerk QN aufbauen.

Sobald das Software-Artefakt / die Software-Artefakte an der entsprechenden Recheneinheit ED angelangt ist / sind, kann / können diese auf dieser installiert werden.

Außerdem zeigt FIG 1 ein Ausführungsbeispiel eines erfindungsgemäßen Verfahrens. Die Verfahrensschritte sind mit Pfeilen gekennzeichnet.

In einem ersten Schritt S1 werden in dem Quellnetzwerk QN Nachrichten über verfügbare Software-Artefakte generiert und an den Betreiber OP des Zielnetzwerks ZN übermittelt.

Das Übermitteln der Nachrichten kann beispielsweise durch den Service/Plattform Provider SP erfolgen. Dabei sind alle möglichen Wege erdenklich. Beispielsweise kann der Service Provider SP Briefe, E-Mail-Benachrichtigungen, Pushnachrichten, Nachrichten gemäß SMS oder Ähnliches an den Betreiber OP senden. Das Übermitteln der Nachrichten kann außerdem auf automatisiertem Weg (z.B. Anbindung an ein Asset Managementsystem des Betreibers OP wie bspw. SAP) geschehen.

Jede Nachricht enthält Daten, die wenigstens ein verfügbares Software-Artefakt kennzeichnen. Es ist auch denkbar, dass der Betreiber OP über mehrere verfügbare Software-Artefakte in einer Nachricht informiert wird.

In einem zweiten Schritt S2 wird jede Nachricht durch den Betreiber OP überprüft, um zu bestimmen, ob das Herunterladen des wenigstens einen verfügbaren Software-Artefakts aus dem Quellnetzwerk QN erwünscht ist, und wenn das Herunterladen des wenigstens einen verfügbaren Software-Artefakts erwünscht ist, die das wenigstens eine verfügbare Software-Artefakt kennzeichnenden Daten in der Whitelist abgespeichert werden, sodass jeder Eintrag jeweils ein Software-Artefakt kennzeichnet. Die kennzeichnenden Daten können u.a. bspw. eine Identifikation, eine kryptographische Signatur und eine Beschreibung des Software-Artefakts enthalten. Die vorgenannte Überprüfung der Nachrichten und das Eintragen in die Whitelist WL kann ebenfalls automatisiert erfolgen, sodass die Bereitstellung der Whitelist automatisiert, z.B. mithilfe eines Softwareprogramms erfolgen kann.

Um die Sicherheit des Zielnetzwerk ZN zu erhöhen, kann nur der Betreiber OP und vorzugsweise von dem Betreiber bestimmte Personen oder Software-Programme des Zielnetzwerks ZN eine Berechtigung zum Ändern der Whitelist WL besitzen.

Schritte S1 und S2 können Teilschritte des Bereitstellens der der Whitelist bilden.

In einem dritten Schritt S3 empfängt das Plugin PL stellvertretend für das Quellnetzwerk QN die Anfragen von den Recheneinheiten ED aus dem Zielnetzwerk ZN bezüglich Verfügbarkeit neuer Software-Artefakte, die vorzugsweise auf entsprechenden Recheneinheiten ED installierbar sind.

In einem vierten Schritt S4 greift das Plugin PL auf die Whitelist WL zu - vorzugsweise ohne die Whitelist zu verändern - und vergleicht jede Anfrage mit den Einträgen in der Whitelist WL, um wenigstens einen, vorzugsweise alle zu der Anfrage passenden Einträge in der Whitelist zu finden.

In einem fünften Schritt S5 ruft das Plugin PL - im Fall einer Übereinstimmung - das(die) Software-Artefakt(e) ab, das(die) in dem(den) zu der Anfrage passenden Eintrag(Einträgen) gekennzeichnet ist(sind), oder, wenn keine Übereinstimmung gefunden werden konnte, blockiert die Anfrage.

In einer Ausführungsform kann das Plugin PL das Herunterladen von den Software-Artefakten nur triggern/initiieren bzw. erlauben, wobei das Herunterladen selbst mittels des Proxy-Systems PS beziehungsweise einer entsprechenden Proxy-Komponente durchgeführt werden kann.

Ferner kann das Plugin die Anfragen in einer Anfragen-Struktur, z.B. in einer Anfragen-Datei oder einer Anfragen-Datenbank auf dem Proxy-System PS oder in einem beispielsweise flüchtigen Zwischenspeicher temporär sammeln und speichern und erst nach einer vorgegebenen Zeit (cache-timeout) oder erst nachdem die Anfragen-Struktur eine vorgegebene Größe erreicht hat, die Anfragen-Struktur mit der Whitelist WL vergleichen.

In einem sechsten Schritt S6 kann das Plugin das(die) Software-Artefakt(e) stellvertretend für die Edge-Geräte ED empfangen und auf dem Proxy-System PS in einem z.B. persistenten Speicher oder in einem flüchtigen Speicher speichern.

Die gespeicherten Software-Artefakte kann das Plugin PL in einem weiteren Schritt S7 an die Recheneinheiten ED verteilen. Dies kann auf eine optimierte Weise geschehen, z.B. zu einem vorbestimmten Zeitpunkt, an dem die Maschinen, die den Recheneinheiten zugeordnet sind, nicht in Betrieb sind oder wenn das Zielnetzwerk ZN wenig belastet ist, oder zu einem spezifischen Zeitpunkt, der vom Betreiber OP geplant wird

Das IT-System 1 kann außerdem zusätzliche Mittel zu einer automatisierten Ausführung aller genannten Schritte S1 bis S8 aufweisen (nicht gezeigt). Insbesondere kann das IT-System Software mit einer Liste von Befehlen umfassen, wobei wenn diese Befehle von einem oder mehreren Prozessoren in dem IT-System abgearbeitet werden, das IT-System 1 die Schritte S1 bis S8 ausführt.

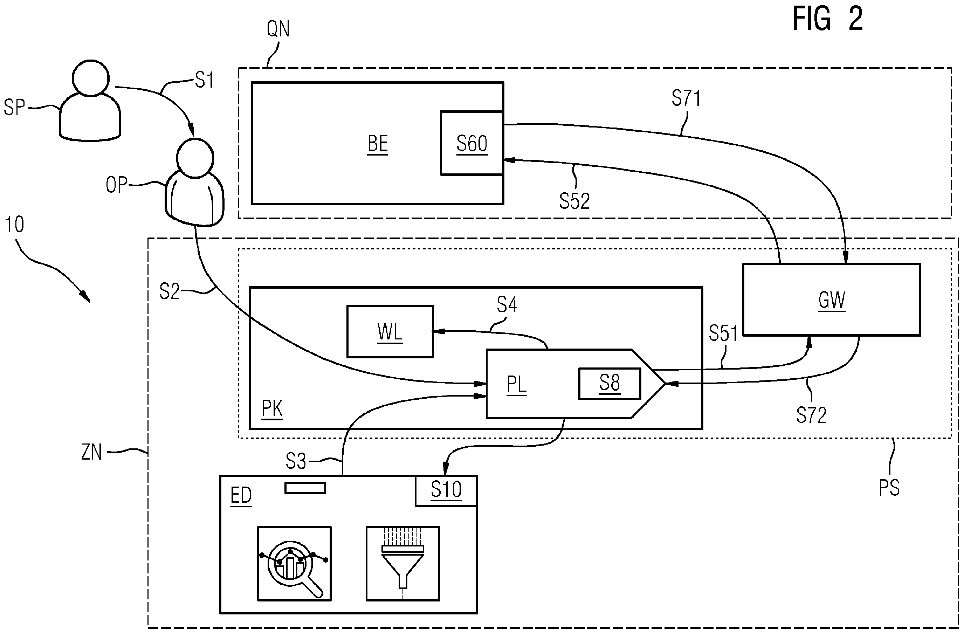

In FIG 2 ist eine weitere Ausführungsform der Erfindung dargestellt. Die nachfolgende Beschreibung beschränkt sich im Wesentlichen auf die Unterschiede zu der Ausführungsform in FIG 1, wobei bezüglich gleichbleibender Elemente, Merkmale, Verfahrensschritte und Funktionen auf die Beschreibung des Ausführungsbeispiels in FIG 1 verwiesen wird.

Die in FIG 2 schematisch gezeigte IT-Umgebung 10 umfasst ebenfalls das Plugin PL und die Whitelist WL. Das Proxy-System PS umfasst dabei eine Proxy-Komponente PK, die direkt - d.h. ohne weitere Zwischenkomponenten - mit den Recheneinheiten ED kommunizieren kann und eine Gateway-Komponente GW, die der Proxy-Komponente PK vorgeschaltet ist, um den Traffic zwischen der Proxy-Komponente PK und dem Quellnetzwerk QN zu routen und zu kontrollieren. Die Proxy-Komponente PK kann beispielsweise von dem Service bzw. Plattform Provider SP und/oder von dem Hersteller der Recheneinheiten ED bereitgestellt sein. Die Gateway-Komponente GW kann beispielsweise von dem Betreiber OP des Zielnetzwerks ZN bereitgestellt sein.

Die Gateway-Komponente GW kann als ein API-Gateway ausgebildet sein.

Die Proxy-Komponente PK umfasst sowohl das Plugin PL als auch die Whitelist WL. In einer anderen Ausführungsform kann, wie in FIG 1 gezeigt, die Whitelist WL eine eigenständige, vorzugsweise vom Betreiber OP kontrollierte Komponente darstellen.

Zum Herunterladen der genehmigten Software-Artefakte leitet das Plugin PL die entsprechende Anfrage an die Gateway-Komponente GW weiter - Schritt 51, wobei diese stellvertretend für das Zielnetzwerk ZN agiert und bei der Backend-Recheneinheit BE die Software-Artefakt abfragt - Schritt 52.

Vor der Freigabe an die Gateway-Komponente GW kann die Backend-Recheneinheit BE die Software-Artefakte signieren und/oder verschlüsselt - Schritt S60.

Hierzu können Schlüsselpaare aus privaten und öffentlichen Schlüsseln generiert werden, wobei die privaten Schlüssel dem

Quellnetzwerk QN, z.B. der Backend-Recheneinheit BE bereitgestellt werden und die öffentlichen Schlüssel dem Zielnetzwerk ZN, z.B. der Proxy-Komponente PK, dem Plugin PL oder der Recheneinheiten ED bereitgestellt werden. Die Software-Artefakte können mit mittels der privaten Schlüssel generierten Signaturen in dem Quellnetzwerk QN, z.B. mittels der Backend-Recheneinheit BE signiert werden.

Denkbar ist auch, dass die Signaturen der signierten Software-Artefakte mittels der entsprechenden öffentlichen Schlüssel auf dem Edge-Gerät ED in dem Zielnetzwerk ZN validiert werden, an das das Software-Artefakt durch das Plugin PL weitergeleitet wird.

Die zuvor genannte Verteilung der Schlüssel beschreibt die Anforderungen für die Signierung der Software-Artefakte in dem Quellnetzwerk QN und Integritätsprüfung der signierten Software-Artefakte in dem Zielnetzwerk ZN. Für eine Verschlüsselung der Software-Artefakte ist die Verteilung der Schlüssel für eine asymmetrische Verschlüsselung umgekehrt. In einer weiteren Ausführungsform ist eine verschlüsselte Übertragung via symmetrische Verschlüsselung möglich.

Nachdem das(die) Software-Artefakt(e) heruntergeladen - Schritt 71 - und mittels der Gateway-Komponente GW an die Proxy-Komponente PK weitergeleitet wurden - Schritt 72, kann das Plugin PL das Software-Artefakt hinsichtlich seiner Integrität prüfen - Schritt S8. Die Integritätsprüfung kann beispielsweise eine Signaturvalidierung der Software-Artefakte umfassen. Diese Integritätsprüfung kann in einer weiteren Ausführungsform alternativ oder zusätzlich auf dem / den Edge-Gerät(en) ED stattfinden.

Unabhängig von der Integritätsprüfung kann die Proxy-Komponente PK die heruntergeladenen Software-Artefakte lokal cachen, so dass sie (optimiert bzgl. der Internetkommunikation) an mehrere Edge-Geräte ED ausgeliefert werden können.

Ist diese optionale Prüfung nicht erfolgreich, so kann das heruntergeladene Software-Artefakt, dessen Signatur nicht validiert werden konnte, gelöscht und optional ein, z.B. an den Betreiber OP adressierter Alarm im Zielnetzwerk ZN generiert werden.

Ist die Integritätsprüfung erfolgreich, kann das Software-Artefakt an das entsprechende Edge-Gerät ED weitergeleitet werden - Schritt S9.

Die Recheneinheit ED kann nach dem Empfangen des Software-Artefakts dieses - falls es verschlüsselt übertragen wurde - entschlüsseln - Schritt 10 - und im Anschluss installieren.

Darüber hinaus können alle Schritte des Verfahrens protokolliert werden, wobei jeder Schritt vorzugsweise mit einem Zeitstempel versehen wird, wobei ein dadurch erstelltes Protokoll vorzugsweise in einer Datenbank abgelegt wird, wobei die Datenbank in dem Zielnetzwerk ZN enthalten ist.

Ferner kann das Plugin zumindest teilweise die Anfragen und das Herunterladen betreffende Details in einer Log-Datei aufzeichnen.

Diese Art Auditing aller Details in einer Datenbank kann für die Nachweisbarkeit und Nicht-Abstreitbarkeit der einzelnen Schritte des Verfahrens nützlich sein.

Die im Zusammenhang mit der in FIG 2 beschriebenen Ausführungsform ermöglicht beispielsweise Ende-zu-Ende Verschlüsselung des Software-Artefakts durch den Plattform-Provider SP anhand eines öffentlichen Schlüssels des Plattform-Providers vor dem Artefakt-Download auf der Cloud und Entschlüsselung des Artefakts mittels eines zugehörigen privaten Schlüssels im Zielnetzwerk ZN, z.B. vor der Installation auf der Recheneinheit ED.

Außerdem ermöglicht die in FIG 2 beschriebene Ausführungsform beispielsweise eine Ende-zu-Ende Integritätssicherung des Software-Artefakts aus Sicht des Plattform-Providers SP und / oder des Betreibers OP, indem die Artefakte vor dem Download aus der Cloud kryptographisch signiert und vor der Installation auf den Edge-Geräten ED anhand ihrer Signatur (z.B. eine Hash-Berechnung über eine Artefakt-Datei) auf Integrität geprüft werden.

Das Plugin kann als eine Firewall, z.B. eine Proxy-Firewall ausgebildet sein, d.h. alle Funktionalitäten einer Firewall aufweisen.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können beschriebene Systeme und Plugins durch Merkmale verbessert werden, die in Bezug auf die Verfahren beschrieben oder beansprucht wurden und *vice versa.*

## Patentansprüche

1. Verfahren zum Übertragen von Software-Artefakten aus einem Quellnetzwerk (QN) in ein Zielnetzwerk (ZN), wobei zwischen dem Ziel- und dem Quellnetzwerk ein Proxy-System (PS) angeordnet ist, wobei das Proxy-System (PL) ein Plugin (PL) umfasst, wobei das Übertragen zielnetzwerkseitig mittels des Plugins (PL) kontrolliert wird, wobei
- eine zielnetzwerkinterne Informationsstruktur (WL) bereitgestellt wird, wobei die Informationsstruktur Einträge enthält, wobei jeder Eintrag jeweils ein Software-Artefakt kennzeichnet, dessen Herunterladen von einem Betreiber des Zielnetzwerks (ZN) genehmigt ist,
mittels des Plugins (PL):
- die Einträge aus der zielnetzwerkinternen Informationsstruktur (WL) ausgelesen werden,
- Anfragen aus dem Zielnetzwerk (WL) bezüglich Verfügbarkeit neuer Software-Artefakte stellvertretend für das Quellnetzwerk (QN) empfangen werden,
- für jede Anfrage nach wenigstens einem zu der Anfrage passenden Eintrag in der zielnetzwerkinternen Informationsstruktur (WL) zu suchen, und
- abhängig davon, ob der wenigstens eine passende Eintrag in der zielnetzwerkinternen Informationsstruktur (WL) vorhanden ist, entweder das in dem wenigstens einen, zu der Anfrage passenden Eintrag gekennzeichnete Software-Artefakt abgerufen wird oder die Anfrage blockiert wird.

2. Verfahren nach Anspruch 1, wobei das Bereitstellen der zielnetzwerkinternen Informationsstruktur (WL) Teilschritte umfasst, in welchen
- in dem Quellnetzwerk (QN) Nachrichten über verfügbare Software-Artefakte generiert und an einen Betreiber (OP) des Zielnetzwerks (ZN) übermittelt werden, wobei jede Nachricht Daten enthält, die wenigstens ein verfügbares Software-Artefakt kennzeichnen,
- jede Nachricht durch den Betreiber (OP) überprüft wird, um zu bestimmen, ob das Herunterladen des wenigstens einen verfügbaren Software-Artefakts aus dem Quellnetzwerk (QN) erwünscht ist,
- wenn das Herunterladen des wenigstens einen verfügbaren Software-Artefakts erwünscht ist, die das wenigstens eine verfügbare Software-Artefakt kennzeichnenden Daten in die zielnetzwerkinterne Informationsstruktur (WL) gespeichert werden, sodass jeder Eintrag jeweils ein Software-Artefakt kennzeichnet, wobei die zielnetzwerkinterne Informationsstruktur (WL) vorzugsweise nur von dem Betreiber (OP) des Zielnetzwerks (ZN) geändert werden kann.

3. Verfahren nach Anspruch 1 oder 2, wobei die Anfragen in dem Zielnetzwerk (ZN) in vorgebbaren Zeitabständen generiert werden und vorzugsweise an das Quellnetzwerk (QN) oder an das Proxy-System (PS) adressiert werden.

4. Verfahren nach einem der Ansprüche 1 bis 3, wobei zum Abrufen des Software-Artefakts eine Verbindung aus dem Zielnetzwerk (ZN) in das Quellnetzwerk (QN) aufgebaut und nach dem Abrufen wieder getrennt wird.

5. Verfahren nach Anspruch 4, wobei das Plugin (PL) das Software-Artefakt stellvertretend für das Zielnetzwerk (ZN) herunterlädt .

6. Verfahren nach Anspruch 5, wobei das Plugin (PL) das heruntergeladene Software-Artefakt an mindestens ein in dem Zielnetzwerk (ZN) registriertes Gerät weiterleitet, wobei vorzugsweise das Software-Artefakt anschließend auf dem mindestens einen Gerät (ED) installiert wird.

7. Verfahren nach einem der Ansprüche 1 bis 6, wobei das Software-Artefakt hinsichtlich seiner Integrität mittels des Plugins (PL) geprüft wird.

8. Verfahren nach Anspruch 7, wobei die Integritätsprüfung eine Signaturvalidierung des Software-Artefakts umfasst.

9. Verfahren nach einem der Ansprüche 1 bis 8, wobei jeder Eintrag in der zielnetzwerkinternen Informationsstruktur (WL) eine Identifikation des Software-Artefakts und/oder kryptographische Signatur des Software-Artefakts, beispielsweise ein signierter Hash des Dateiinhalts des Software-Artefakts, und/oder eine Angabe eines Zeitpunkts, zu welchem das Software-Artefakt herunterladbar ist, und/oder eine textuelle Beschreibung, beispielsweise ein Change-Log umfasst.

10. Verfahren nach einem der Ansprüche 1 bis 9, wobei Schlüsselpaare aus privaten und öffentlichen Schlüsseln generiert werden, wobei die privaten Schlüssel dem Quellnetzwerk (QN) bereitgestellt werden und die öffentlichen Schlüssel dem Zielnetzwerk bereitgestellt werden, wobei die Software-Artefakte mit mittels der privaten Schlüssel generierten Signaturen in dem Quellnetzwerk (QN) signiert werden und die Signaturen der signierten Software-Artefakte mittels der entsprechenden öffentlichen Schlüssel auf jenem Gerät (ED) in dem Zielnetzwerk (ZN) validiert werden, für das das Software-Artefakt bestimmt ist.

11. Verfahren nach einem der Ansprüche 1 bis 10, wobei das Software-Artefakt vor dem Herunterladen verschlüsselt und nach dem Herunterladen entschlüsselt wird.

12. Verfahren nach einem der Ansprüche 1 bis 11, wobei alle Schritte des Verfahrens protokolliert werden, wobei jeder Schritt vorzugsweise mit einem Zeitstempel versehen wird, wobei ein dadurch erstelltes Protokoll vorzugsweise in einer Datenbank abgelegt wird, wobei die Datenbank in dem Zielnetzwerk (ZN) enthalten ist.

13. Verfahren nach einem der Ansprüche 1 bis 12, wobei das Plugin (PL) zumindest teilweise die Anfragen und das Herunterladen betreffende Details in einer Log-Datenstruktur aufzeichnet.

14. Plugin (PL) für ein Proxy-System (PS), wobei das Proxy-System zwischen einem Zielnetzwerk (ZN) und einem Quellnetzwerk (QN) angeordnet ist, wobei das Plugin (PL) dazu konfiguriert ist,
- Einträge aus einer zielnetzwerkinternen Informationsstruktur (WL) auszulesen, wobei jeder Eintrag jeweils ein Software-Artefakt kennzeichnet, dessen Herunterladen von einem Betreiber (OP) des Zielnetzwerks (ZN) genehmigt ist,
- Anfragen aus dem Zielnetzwerk (ZN) an das Quellnetzwerk (QN) bezüglich Verfügbarkeit neuer Software-Artefakte stellvertretend für das Quellnetzwerk (QN) zu empfangen,
- für jede Anfrage nach wenigstens einem zu der Anfrage passenden Eintrag in der zielnetzwerkinternen Informationsstruktur (WL) zu suchen, und
- abhängig davon, ob der wenigstens eine passende Eintrag in der zielnetzwerkinternen Informationsstruktur (WL) vorhanden ist, entweder das in dem wenigstens einen, zu der Anfrage passenden Eintrag gekennzeichnete Software-Artefakt abzurufen oder die Anfrage zu blockieren.

15. System (1, 10) umfassend ein Quellnetzwerk (QN), ein Zielnetzwerk (ZN), ein zwischen dem Ziel- und dem Quellnetzwerk zwischengeschaltetes Proxy-System (PS) und eine zielnetzwerkinterne Informationsstruktur (WL), wobei das Proxy-System (PS) ein Plugin (PL) nach Anspruch 14 umfasst und die Informationsstruktur Einträge enthält, wobei jeder Eintrag jeweils ein Software-Artefakt kennzeichnet, dessen Herunterladen von einem Betreiber (OP) des Zielnetzwerks (ZN) genehmigt ist, wobei das System vorzugsweise zusätzliche Mittel zur Ausführung der Schritte des Verfahrens nach einem der Ansprüche 1 bis 13 umfasst.
